# EUROPEAN PATENT APPLICATION

(11) **EP 3 217 524 A1**
(43) Date of publication of application: **13.09.2017**
(21) Application number: 16159928.7
(22) Date of filing: 11.03.2016
(51) Int. Cl.: H02M 3/156, H02M 1/00

(54) **METHOD OF CONTROLLING A MULTI CURRENT PATH DC/DC CONVERTER AND MULTI CURRENT PATH DC/DC CONVERTER**

(71) Applicant: Knorr-Bremse Powertech Gmbh & Co. KG., 83607 Holzkirchen (DE)
(72) Inventor: LIU, Jie, 83607 Holzkirchen (DE); KRUMBOECK, Jörg, 81549 München (DE)
(74) Representative: Schmitt-Nilson Schraud Waibel Wohlfrom Patentanwälte Partnerschaft mbB

(57) **Abstract**

A method of controlling a multi current path DC/DC converter (2), having a pair of input terminal (10), a first power transfer module (100) with a first buffer capacitor (110), a first switch (130), a first inductor (132) and a first output capacitor (120), and a second power transfer module (200) with a second buffer capacitor (210), a second switch (230), a second inductor (232), and a second output capacitor (220), wherein the first and second buffer capacitors are connected in series between the pair of input terminals of the multi current path DC/DC converter, includes the steps of operating the first switch in accordance with a first peak current mode control, such that power is intermittently transferred from the first buffer capacitor to the first output capacitor via a first power transfer current (i₁) through the first inductor, with the first peak current mode control of the first switch being carried out with respect to the first power transfer current, and operating the second switch in accordance with a second peak current mode control, such that power is intermittently transferred from the second buffer capacitor to the second output capacitor via a second power transfer current (i₂) through the second inductor, with the second peak current mode control of the second switch being carried out with respect to the second power transfer current, wherein each of the first and second peak current mode controls is dependent on a relation between a momentary power transfer state of the first power transfer module and a momentary power transfer state of the second power transfer module.

## Description

The present invention is in the field of DC/DC converters and in the field of methods of controlling the same. In particular, the present invention relates to DC/DC converters that have multiple current paths for transferring the power from the input side to the output side.

For providing power to a train, such as a passenger train or a freight train, various power conversion operations and various power conversion modules are commonly employed. A number of components in a train are driven by AC power, such as AC motors for driving the train, compressors, batteries, cooling fans, etc. However, trains are often supplied with DC power from external power sources, such as power lines, during the operation of the train. In order to convert the input DC power into the desired AC power, a power conversion of two or more stages commonly takes place. In the first of these stages, the voltage level of the DC input power is regularly adjusted, with this adjustment resulting in a reduction of the high input voltages to a level that subsequent conversion stages can process more easily. Due to the high input voltages, it is difficult to provide a stable and reliable initial DC/DC conversion. Prior art approaches have not been satisfactory in this respect.

Accordingly, it would be beneficial to provide a DC/DC converter as well as a method of controlling a DC/DC converter that allow for an improved performance of the initial power conversion stage in terms of stability and reliability.

Exemplary embodiments of the invention include a method of controlling a multi current path DC/DC converter, having a pair of input terminals, a first power transfer module with a first buffer capacitor, a first switch, a first inductor and a first output capacitor, and a second power transfer module with a second buffer capacitor, a second switch, a second inductor, and a second output capacitor, wherein the first and second buffer capacitors are connected in series between the pair of input terminals of the multi current path DC/DC converter. The method comprises the steps of operating the first switch in accordance with a first peak current mode control, such that power is intermittently transferred from the first buffer capacitor to the first output capacitor via a first power transfer current through the first inductor, with the first peak current mode control of the first switch being carried out with respect to the first power transfer current, and operating the second switch in accordance with a second peak current mode control, such that power is intermittently transferred from the second buffer capacitor to the second output capacitor via a second power transfer current through the second inductor, with the second peak current mode control of the second switch being carried out with respect to the second power transfer current. Each of the first and second peak current mode controls is dependent on a relation between a momentary power transfer state of the first power transfer module and a momentary power transfer state of the second power transfer module.

Exemplary embodiments of the invention allow for a particularly stable and reliable method of controlling a multi current path DC/DC converter. In particular, the features of providing power transfer through two separate power transfer modules, of controlling both of these modules in accordance with peak current mode controls, and of making each of the peak current mode controls dependent on the momentary power transfer states of the two power transfer modules allow for a particularly stable operation of the DC/DC converter and for running the DC/DC converter in such a way that a high reliability thereof can be achieved. Splitting up the power transfer into two separate current paths, being provided in the two separate power transfer modules, has a positive effect on reliability, because each current path does not have to transfer the entire power. This allows for reducing the strain on the components and/or using smaller, less complex, and/or cheaper components. Also, the two separate current paths have a positive effect on the stability of the DC/DC converter, as circuit inaccuracies in one of the two paths have a lower overall effect on the performance of the DC/DC converter. Operating the first and second power transfer modules in accordance with peak current mode controls allows for a very reliable operation of the DC/DC controller, because it is ensured in every power transfer cycle that a maximum current through each of the power transfer modules is not exceeded, thus preventing excessive strain on the components of a particular power transfer module. Further, making the two peak current mode controls dependent on the relation between the momentary power transfer states of the two power transfer modules allows for evening out the extent of power transfer between the two power transfer modules, allowing for a nearly or fully balanced operation of the two power transfer modules. This balancing of the two power transfer modules leads to a highly stable operating point of the overall system, effectively preventing diverging electric behaviors of the two power transfer modules, and optimizes the overall reliability of the system. An improved method of controlling a DC/DC converter can be provided having very favorable stability and reliability characteristics.

The multi current path DC/DC converter has at least two parallel current paths to transfer the power from the pair of input terminals to the output capacitors of the multi current path DC/DC converter. In particular, the first and second power transfer modules are arranged in parallel between the input side and the output side of the multi current path DC/DC converter. With the first and second buffer capacitors being connected in series between the pair of input terminals, the input voltage across the pair of input terminals is split up between the two buffer capacitors, such that those two buffer capacitors form the input sides for the parallel first and second power transfer modules. It is pointed out that the connection of the buffer capacitors in series does not necessarily mean that the two buffer capacitors are connected directly to each other and to the pair of input terminals. While this is possible, it is also possible that other circuit element form part of the series connection. In any case, part of the input voltage across the pair of input terminals is present across the first buffer capacitor, and part of the input voltage across the pair of input terminals is present across the second buffer capacitor.

The term peak current mode control is a known term in the art and relates to a control method where the power transfer current is limited in each power transfer cycle, also referred to as switching period herein. In particular, the power conversion from the input side to the output side of the DC/DC converter is carried out via the switching of the respective switches in the respective power transfer modules, with the duty cycle of the switching determining the voltage conversion ratio. By setting an appropriate peak current value, the desired power conversion can be achieved in the framework of a peak current mode control. Accordingly, the peak current mode control provides for an intermittent power transfer from the input side to the output side with a duty cycle that achieves the desired voltage conversion ratio. Such peak current mode control has the additional benefit of limiting the current per current path, thus providing a safety net for the maximum allowable current in case the system does not operate as expected / as desired for whatever reason.

By making the first and second peak current mode controls of the first and second power transfer modules dependent on the momentary power transfer states of the first and second power transfer modules, an imbalance in power transfer among the two power transfer modules can be reduced or mitigated. Such imbalances may arise due to the first and second power transfer modules not being entirely symmetrical. In particular, the individual components of the first and second power transfer modules may be not exactly according to specification, such as due to manufacturing tolerances. Such deviations between the first and second power transfer modules may lead to one of the first and second power transfer modules transferring more power than the other power transfer module, with this imbalance potentially increasing over time and leading to an overall unstable operation of the DC/DC converter. By taking the momentary power transfer states of the two power transfer modules into account for the peak current mode controls, power transfer imbalances and instabilities can be reliably prevented.

In this context, it is pointed out that the term momentary power transfer state may refer to an electric parameter that is readily measurable in the DC/DC converter, such as the voltage across the buffer capacitors. The term may also refer to a parameter that is derived from the circuit behaviour over time via an appropriate logic, such as from a sensing of the first and second power transfer currents over time. In other words, the term momentary power transfer state may refer to a single parameter derivable from the DC/DC converter at a particular instance or to a parameter derivable from an observation of the behaviour of the DC/DC converter over time.

In particular, in the framework of the first and second peak current mode controls, the switching times of the first and second switches may be adjusted on the basis of the relation between the momentary power transfer state of the first power transfer module and the momentary power transfer state of the second power transfer module. This adjustment of the switching times may be achieved via setting the peak current value of the peak current mode controls depending on the relation between the momentary power transfer states of the two power transfer modules. Further in particular, the adjusting of the switching times of the first and second switches on the basis of the relation between the momentary power transfer state of the first power transfer module and the momentary power transfer state of the second power transfer module may be carried out such that the momentary power transfer state of the first power transfer module and the momentary power transfer state of the second power transfer module converge as a consequence of the adjusting. In other words, the adjusting of the switching times of the first and second switches may counteract an imbalance observed between the first and second power transfer states.

The DC/DC converter may be a non-isolated DC/DC converter, i.e. a DC/DC converter that has galvanic connections between the input side and the output side. In other words, the DC/DC converter may be free of transformers transferring the power from the input sides to the output side in a galvanically isolated manner.

According to a further embodiment, the multi current path DC/DC converter has a pair of output terminals and each of the first and second peak current mode controls is further dependent on a relation between a momentary output voltage across the pair of output terminals and a desired output voltage across the pair of output terminals. In this way, the first and second peak current mode controls are dependent on all four of the momentary power transfer state of the first power transfer module, the momentary power transfer state of the second power transfer module, the momentary output voltage across the pair of output terminals, and the desired output voltage across the pair of output terminals. In this way, the first and second peak current mode controls can operate the DC/DC converter in such a way that the momentary output voltage across the pair of output terminals is converged towards the desired output voltage across the pair of output terminals and that an imbalance between the momentary power transfer state of the first and second power transfer modules is reduced or eliminated at the same time. In general, the first and second output capacitors may be connected in series between the pair of output terminals. Accordingly, the momentary output voltage across the pair of output terminals may be the sum of the momentary voltages across the first and second output capacitors.

According to a further embodiment, the first momentary power transfer state is defined by a first input voltage across the first buffer capacitor and the second momentary power transfer state is defined by a second input voltage across the second buffer capacitor. In this way, the first and second momentary power transfer states correspond to a single, readily available parameter each, such that the measuring / sensing of this one parameter can be carried out in a straightforward and efficient manner.

According to a further embodiment, when one of the first and second input voltages is larger than the other one of the first and second input voltages, the first and second peak current mode controls close an associated one of the first and second switches for a longer time than the other one of the first and second switches. In other words, when the voltage across the first buffer capacitor is higher than the voltage across the second buffer capacitor, the first switch is closed for a longer time than the second switch by the peak current mode controls. In yet other words, the duty cycle for the first power transfer module is higher than the duty cycle for the second power transfer module, when the voltage across the first buffer capacitor is larger than the voltage across the second buffer capacitor. In this way, more power transfer time is provided for the higher charge, present on the first buffer capacitor, to flow to the output side of the DC/DC converter than for the lower charge, present on the second buffer capacitor. In this way, the imbalance between the charges on the first and second capacitors, i.e. the imbalance between the power transfer states of the two power transfer modules, is efficiently balanced by the switching times, i.e. by the duty cycles, of the first and second switches in the framework of the peak current mode controls. When the first switch is closed for a longer time than in the case of balanced first and second input voltages, the second switch may be closed for an analogously shortened time, and vice versa. In this way, the power transfer sum may stay constant. When the voltage across the first buffer capacitor is higher than the voltage across the second buffer capacitor, it is also possible to maintain the closing time of the first switch, as compared to the case of balanced first and second input voltages, and to shorten the closing time of the second switch, and vice versa.

According to a further embodiment, the relation between the momentary output voltage across the pair of output terminals and the desired output voltage across the pair of output terminals is one of a difference relationship between the momentary output voltage across the pair of output terminals and the desired output voltage across the pair of output terminals and a ratio between the momentary output voltage across the pair of output terminals and the desired output voltage across the pair of output terminals. Calculating the difference between the momentary output voltage and the desired output voltage and calculating the ratio between the momentary output voltage and the desired output voltage are two exemplary ways of relating the two parameters and determining a measure of the deviation of the output voltage from a desired operating point. It is pointed out that the difference / ratio may be used as a direct measure for the deviation, but may also be multiplied by a factor and/or provided with an additive term for yielding a suitable measure of the deviation.

According to a further embodiment, the relation between the momentary power transfer state of the first power transfer module and the momentary power transfer state of the second power transfer module is one of a difference relationship and a ratio between the first input voltage and the second input voltage. Again, forming a difference or a ratio between the first and second input voltages are suitable ways of yielding a measure for the imbalance in power transfer between the first and second power transfer modules. The result of the difference / ratio may again be multiplied with a factor and/or provided with an additive term for yielding a suitable measure of the deviation from a balanced power transfer. Both the operations of subtracting and dividing are easy ways of relating the two parameters and extracting meaningful information about the relative power transfer state.

According to a further embodiment, each of the first and second peak current mode controls is a ramp-compensated peak current mode control. Adding additional ramp compensation to the peak current mode controls allows for an even more stable operation of the DC/DC converter. Ramp compensation means that the peak current value, which forms the limit for the current in each of the switching cycles, is not a fixed value, but decreases throughout the switching cycle along a ramp shape. Such a ramp compensation allows for ensuring that deviations of the nominal operating characteristics of the DC/DC converter, arising from whatever kind of disturbance source, are eliminated in short time frames and are less prone to leading to critical instabilities of the DC/DC converter. Ramp compensation is particularly beneficial in operating situations where the duty cycle exceeds 50%. In particular, ramp compensation is able to prevent an instability known as subharmonic oscillation.

According to a further embodiment, the first and second peak current mode controls are phase-shifted with respect to each other. In this way, the ripple current arising from the current variation during each switching period can be kept small. In particular, the first and second peak current mode controls may be phase-shifted with respect to each other by a phase shift of 90°.

According to a further embodiment, the multi current path DC/DC converter is operated at a total input voltage across the pair of input terminals of between 500 V and 3500 V, in particular of between 800 V and 2000 V. In this way, the DC/DC converter is configured for being operated in a high voltage environment, such as present for the power conditioning modules used in a train environment.

Exemplary embodiments of the invention further include a multi current path DC/DC converter, comprising a pair of input terminals for coupling the multi current path DC/DC converter to an external DC power supply, a pair of output terminals for providing a converted DC power output, a first power transfer module, having a first buffer capacitor, a first switch, a first inductor and a first output capacitor, with the first switch and the first inductor forming a first power transfer path, switchably coupling the first buffer capacitor to the first output capacitor, and a second power transfer module, having a second buffer capacitor, a second switch, a second inductor and a second output capacitor, with the second switch and the second inductor forming a second power transfer path, switchably coupling the second buffer capacitor to the second output capacitor. The first and second buffer capacitors are connected in series between the pair of input terminals and the first and second output capacitors are connected in series between the pair of output terminals. The multi current path DC/DC converter is configured to control each of the first and second switches in accordance with a peak current mode control, with the peak current mode control for each of the first and second switches being dependent on a relation between a momentary power transfer state of the first power transfer module and a momentary power transfer state of the second power transfer module.

Exemplary embodiments of the multi current path DC/DC converter also allow for achieving the beneficial effects, in particular with respect to reliability and stability of the DC/DC converter, as described above with respect to the method of controlling a multi current path DC/DC converter. The additional features and modifications, described above with respect to the method of controlling a multi current path DC/DC converter, apply to the multi current path DC/DC converter in an analogous manner and are explicitly disclosed herewith in the framework of this apparatus.

The multi current path DC/DC converter may have sensors and, if appropriate, associated processing logic to determine the momentary power transfer states of the first and second power transfer modules. In other words, the multi current path DC/DC converter may be configured to sense the momentary power transfer states of the first and second power transfer modules. It is also possible that the multi current path DC/DC converter is configured to determine the momentary power transfer states from sensed parameters. Also, the multi current path DC/DC converter may have a control module, such as a control circuit or a microprocessor based control unit, to implement the peak current mode control for each of the first and second switches. The term switchably coupled means that an electric connection between the first / second buffer capacitor and the first / second output capacitor exists that can be opened / closed via a respective switch.

According to a further embodiment, the peak current mode control for each of the first and second switches is further dependent on a relation between a momentary output voltage across the pair of output terminals and a desired output voltage across the pair of output terminals. As described above, this allows for controlling the power transfer in dependence of the four parameters of the momentary power transfer state of the first power transfer module, the momentary power transfer state of the second power transfer module, the momentary output voltage across the pair of output terminals, and the desired output voltage across the pair of output terminals.

According to a further embodiment, the first momentary power transfer state is defined by a first input voltage across the first buffer capacitor and the second momentary power transfer state is defined by a second input voltage across the second buffer capacitor.

According to a further embodiment, the relation between the momentary output voltage across the pair of output terminals and the desired output voltage across the pair of output terminals is one of a difference relationship and a ratio between the momentary output voltage across the pair of output terminals and the desired output voltage across the pair of output terminals.

According to a further embodiment, the relation between the momentary power transfer state of the first power transfer module and the momentary power transfer state of the second power transfer module is one of a difference relationship and a ratio between the first input voltage and the second input voltage.

According to a further embodiment, the peak current mode control for each of the first and second switches is a ramp-compensated peak current mode control.

According to a further embodiment, the first power transfer module further comprises a third switch and a third inductor, with the third switch and the third inductor forming a third power transfer path, switchably coupling the first buffer capacitor to the first output capacitor, and with the third power transfer path being in parallel with the first power transfer path, and the second power transfer module further comprises a fourth switch and a fourth inductor, with the fourth switch and the fourth inductor forming a fourth power transfer path, switchably coupling the second buffer capacitor to the second output capacitor, and with the fourth power transfer path being in parallel with the second power transfer path. The multi current path DC/DC converter is configured to control each of the third and fourth switches in accordance with a peak current mode control, with the peak current mode control for each of the third and fourth switches being dependent on the relation between the momentary power transfer state of the first power transfer module and the momentary power transfer state of the second power transfer module. In this way, four power transfer paths are arranged in parallel, further reducing the strain on each individual power transfer path. Also, with a higher number of paths, a lower overall ripple in the output behaviour of the DC/DC converter can be achieved. In a particular embodiment, each of the four peak current mode controls is phase-shifted with respect to the three other peak current mode controls. In particular, the peak current mode control of the second current path may be shifted by 90° with respect to the peak current mode control of the first current path. Further in particular, the peak current mode control of the third current path may be shifted by 180° with respect to the peak current mode control of the first current path. Further in particular, the peak current mode control of the fourth current path may be shifted by 270° with respect to the peak current mode control of the first current path. This way of providing more parallel current paths allows for reducing the strain on the switches and inductors, while at the same time keeping the numbers of buffer and output capacitors at the same level, thus keeping the overall DC/DC converter design compact.

According to a further embodiment, the multi current path DC/DC converter comprises at least one further power transfer module, each of the at least one further power transfer module having a further buffer capacitor, a further switch, a further inductor and a further output capacitor, with the further switch and the further inductor forming a further power transfer path, switchably coupling the further buffer capacitor to the further output capacitor. The first buffer capacitor, the second buffer capacitor and the at least one further buffer capacitor are connected in series between the pair of input terminals. The multi current path DC/DC converter is configured to control each of the first switch, the second switch and the at least one further switch in accordance with a peak current mode control, with the peak current mode control for each of the first switch, the second switch and the at least one further switch being dependent on a relation between a momentary power transfer state of the first power transfer module, a momentary power transfer state of the second power transfer module, and a momentary power transfer state of the at least one further power transfer module. In this way, more parallel power transfer modules are provided, such that the strain and the individual requirements for the individual power transfer modules can be further reduced. It is pointed out that the provision of further power transfer modules can be combined with the provision of additional power transfer paths within the individual power transfer modules, depending on the particular application. Further, the output capacitors of all of the first power transfer module, the second power transfer module, and the at least one further power transfer module can be connected in series between the output terminals.

It is explicitly pointed out that the additional features and modifications with respect to providing more parallel power transfer paths, either via the addition of additional power transfer paths within the respective power transfer modules, as described above, or via the addition of one or more further power transfer modules, as described above, may equally be implemented within the framework of the method of controlling the multi current path DC/DC converter. In particular, the phase shifting between the power current paths, as exemplarily described above with respect to the additional power transfer paths within the first and second power transfer modules, may also be implemented in the framework of the method of controlling the multi current path DC/DC converter.

According to a further embodiment, the multi current path DC/DC converter is configured for being operated at a total input voltage across the pair of input terminals of between 500 V and 3500 V, in particular of between 800 V and 2000 V.

Exemplary embodiments of the invention further include a train power conditioning module, comprising a multi current path DC/DC converter, as described in any of the embodiments above. In particular, the train power conditioning module may comprise the multi current path DC/DC converter as an initial power conversion stage, coupled to a DC/AC conversion stage. The DC/AC conversion stage may be downstream of the DC/DC converter. A further DC/DC conversion stage may be coupled between the DC/DC converter, as described in any of the embodiments above, and the DC/AC conversion stage.

Further exemplary embodiments of the invention are described with reference to the accompanying figures, wherein:
- Fig. 1: shows a multi current path DC/DC converter in accordance with an exemplary embodiment of the invention;
- Fig. 2: shows one power transfer path of the multi current path DC/DC converter of Fig. 1, including part of its control circuitry;
- Fig. 3: shows an exemplary current behaviour in the course of an exemplary peak current mode control with slope compensation, as may be present in the power transfer path of Fig. 2 during one switching period;
- Fig. 4: shows a first example of control circuitry to be used with the multi current path DC/DC converter of Fig 1;
- Fig. 5: shows a second example of control circuitry to be used with the multi current path DC/DC converter of Fig. 1; and
- Fig. 6: shows an exemplary behaviour of the voltages across the buffer capacitors and the output capacitors of the multi current path DC/DC converter of Fig. 1 during the operation thereof.

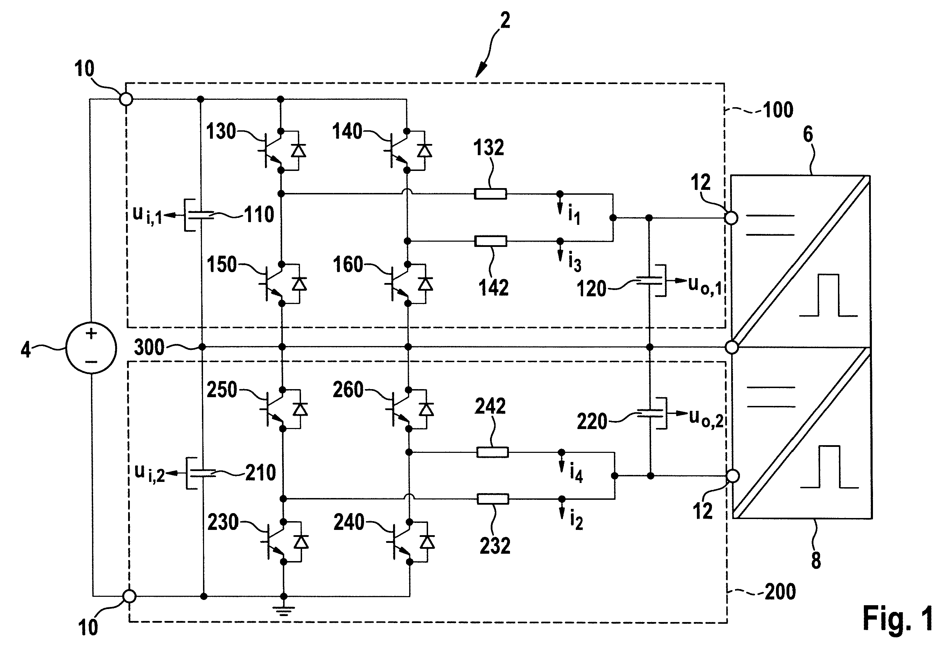

**Fig. 1** shows a multi current path DC/DC converter 2 in accordance with an exemplarily embodiment of the invention. In particular, Fig. 1 shows the DC/DC converter 2 coupled to an external DC power source 4 at its input side and coupled to two DC/AC power converters 6, 8 coupled to its output side. The DC/DC converter 2 has a pair of input terminals 10, to which the external DC power source 4 is connected. The DC/DC converter 2 further has a pair of output terminals 2 and a node 300 of medium potential, to which the two DC/AC converters 6, 8 are coupled. In particular, each of the two DC/AC converters 6, 8 is coupled between one of the pair of output terminals 12 and the node 300. It is pointed out that it is also possible that one DC/AC converter is coupled to the pair of output terminals 12, with no external connection to the node 300 being present. One of the pair of input terminals 10 forms a positive rail of the DC/DC converter 10, while the other one of the pair of input terminals 10 forms a negative rail of the DC/DC converter 10. In the exemplary embodiment of Fig. 1, the negative rail of the DC/DC converter 2 is coupled to ground.

The DC/DC converter 2 comprises a first power transfer module 100 and a second power transfer module 200. The first power transfer module 100 has a first buffer capacitor 110, a first output capacitor 120, four switches, referred to as first switch 130, third switch 140, fifth switch 150 and seventh switch 160, and two inductors, referred to as first inductor 132 and third inductor 142. The first buffer capacitor 110 is coupled between the positive one of the pair of input terminals 10 and the node 300. The first output capacitor 120 is coupled between the positive one of the pair of output terminals 12 and the node 300. The first switch 130 and the first inductor 132 are coupled between the positive one of the input terminals 10 and the positive one of the output terminals 12, forming a first power transfer path that connects the first buffer capacitor 110 and the first output capacitor 120. The third switch 140 and the third inductor 142 are also coupled between the positive one of the input terminals 10 and the positive one of the output terminals 12, forming a third power transfer path that also connects the first buffer capacitor 110 and the first output capacitor 120. The first power transfer path and the third power transfer path are in parallel. The fifth switch 150 is coupled between the connection point of the first switch 130 and the first inductor 132 and the node 300. The seventh switch 160 is coupled between the connection point of the third switch 140 and the third inductor 142 and the node 300.

The second power transfer module 200 has a second buffer capacitor 210, a second output capacitor 220, four switches, denoted as second switch 230, fourth switch 240, sixth switch 250 and eighth switch 260, and two inductors, denoted as second inductor 232 and fourth inductor 242. The second buffer capacitor is coupled between the node 300 and the negative one of the pair of input terminals 10. The second output capacitor is coupled between the node 300 and the negative one of the output terminals 12. The second switch 230 and the second inductor 232 are coupled between the negative one of the input terminals 10 and the negative one of the output terminals 12, forming a second power transfer path that connects the second buffer capacitor 210 and the second output capacitor 220. The fourth switch 240 and the fourth inductor 242 are coupled between the negative one of the input terminals 10 and the negative one of the output terminals 12, forming a fourth power transfer path that connects the second buffer capacitor 210 and the second output capacitor 220. The sixth switch 250 is coupled between the node 300 and the connection point between the second switch 230 and the second inductor 232. The eighth switch 260 is coupled between the node 300 and the connection point between the fourth switch 240 and the fourth inductor 242.

Overall, the first power module 100 and the second power module 200 have four parallel power transfer paths between the input terminals 10 and the output terminals 12. The first buffer capacitor 110 and the second buffer capacitor 210 are connected in series between the pair of input terminals 10. The first output capacitor 120 and the second output capacitor 220 are connected in series between the pair of output terminals 12.

The first to fourth switches 130, 230, 140 and 240 may for example be IGBT's or MOSFET's.

Each of the first and second power transfer modules 100, 200 has four sensors for sensing four electric parameters during the operation of the DC/DC converter 2. The sensors are illustrated by arrows in Fig. 1. The measured parameters are a first input voltage u_{i,1} across the first buffer capacitor 110, a first output voltage u_{o,1} across the first output capacitor 120, a first power transfer current i₁ through the first inductor 132, a third power transfer current i₃ through the third inductor 142, a second input voltage u_{i,2} across the second buffer capacitor 210, a second output voltage u_{o,2} across the second output capacitor 220, a second power transfer current i₂ through the second inductor 232, and a fourth power transfer current i₄ through the fourth inductor 242.

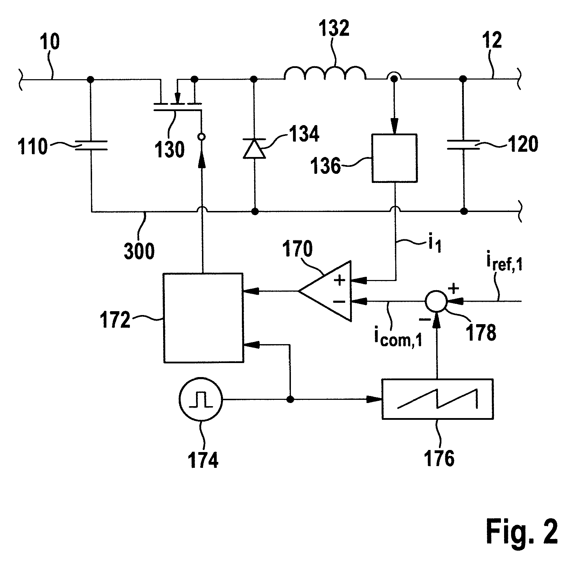

**Fig. 2** shows a portion of the DC/DC converter 2 of Fig. 1, said portion including the first current path with the first switch 130 and the first inductor 132, together with control circuitry that controls the first switch 130 in accordance with a peak current mode control with respect to the first power transfer current i₁ through the first inductor 132. In particular, Fig. 2 shows the positive one of the pair of input terminals 10 and the positive one of the pair of output terminals 12. It further shows node 300, first buffer capacitor 110, first output capacitor 120, first switch 130, and first inductor 132, as described above with respect to Fig. 1. A diode 134 is coupled between the node 300 and the connection point of the first switch 130 and the first inductor 132, which illustrates the diode part of the fifth switch 150, as shown in Fig. 1. Fig. 2 shows a current sensor 136, which measures the first power transfer current i₁, as illustrated by an arrow in Fig. 1. In the exemplary embodiment of Fig. 2, the current sensor 136 is a current sensing resistor, with the output of the current sensor 136 being a representation of the first power transfer current i₁.

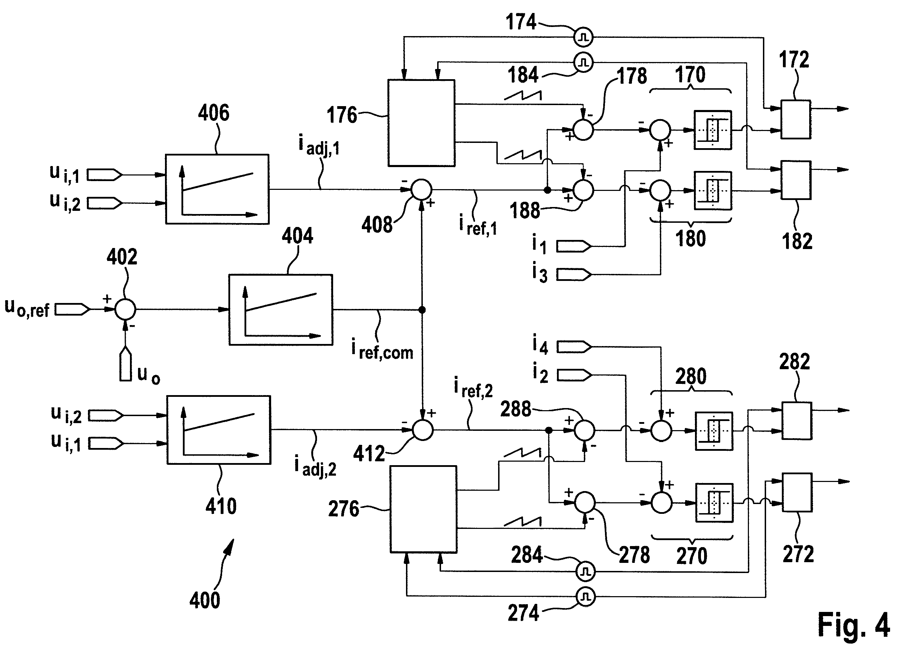

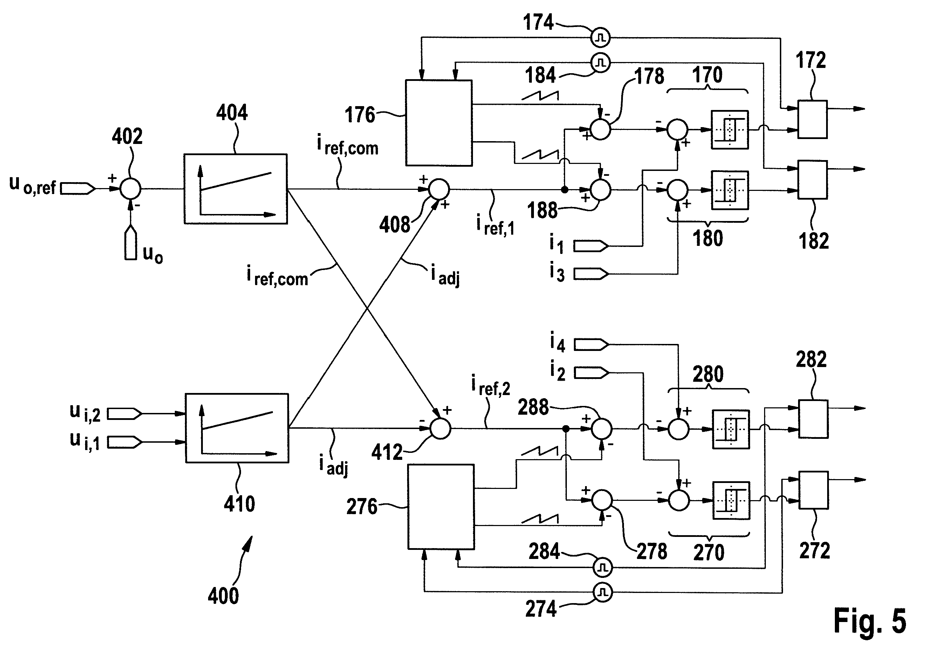

The circuitry, implementing the peak current mode control for the first power transfer path, comprises a first comparator 170, a first RS flip flop 172, a first timing pulse generator 174, a first ramp generator 176, and a first summing element 178. This peak current mode control circuitry has two inputs, namely the first power transfer current i₁ and a first reference current i_{ref,1}. The first reference current i_{ref,1} is the peak current value for the peak current mode control of the first power transfer path. The generation and setting of the first reference current i_{ref,1} will be explained below with respect to Figs. 4 and 5. With respect to present Fig. 2, the first reference current i_{ref,1} is assumed to be a given parameter. The peak current mode control circuitry has one output, namely the output of the first RS flip flop 172, which controls the switching of the first switch 130.

The individual components of the peak current mode control circuitry are coupled as follows. The timing pulse generator 174 is coupled to the set input of the first RS flip flop 172 as well as to the first ramp generator 176. The ramp generator is coupled to a negative input of the first summing element 178. The representation of the first reference current i_{ref,1} is coupled to a positive input of the first summing element 178. The output of the first summing element 178 is coupled to the negative input of the comparator 170. The line carrying the representation of the first power transfer current i₁ is coupled to the positive input of the comparator 170. The output of the comparator 170 is coupled to the reset input of the first RS flip flop 172.

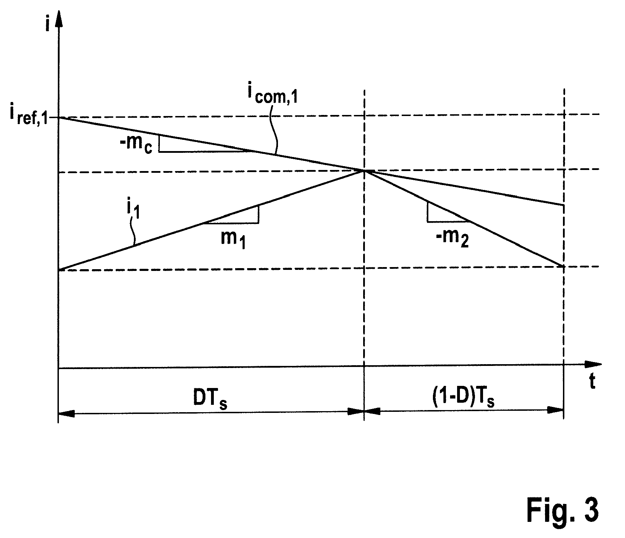

**Fig. 3** illustrates the operation of the first power transfer path and the associated peak current mode control circuitry of Fig. 2 over time. In Fig. 3, the first compensated reference current i_{com,1}, as represented by the output of the first summing element 178, and the first power transfer current i₁, as represented by the output of the first current sensor 136, are depicted over time. In particular, these two parameters are depicted over the duration of one switching period, indicated by T_{S}. At the beginning of the switching period, the first timing pulse generator outputs a timing pulse, which sets the first RS flip flop 172, which turns on the first switch 130. As a consequence, the current flow through the first inductor 132 increases, which is shown as a linear increase with slope m₁ in Fig. 3. This increase in current is due to the DC/DC converter 2 being operated as a DC/DC step-down converter, with the higher voltage across the first buffer capacitor 110 pushing current towards the output side, where the voltage across the first output capacitor 120 is smaller than the voltage across the first buffer capacitor 110. The rate of increase depends on the components and operating voltages used in a particular application and is purely exemplary in Fig. 3.

At the same time, the timing pulse of the first timing pulse generator 174 starts the generation of a ramp signal by the first ramp generator 176. The summation of the first reference current i_{ref,1} and the ramp signal, generated by the first ramp generator 176, with the ramp signal being supplied to the negative input of the summation element 178, results in the generation of the first compensated reference current i_{com,1}, as depicted in Fig. 3. This signal has a negative compensation slope -m_{c}. With the first power transfer current i₁ increasing and the first compensated reference current i_{com,1} decreasing, the magnitude of these two parameters becomes equal at t = DT_{S}. At that point, the first comparator 170 detects this crossover point and outputs a reset signal to the first RS flip flop 172. As a response thereto, the first RS flip flop 172 opens the first switch 130. With the first switch 130 not supplying more current, the first power transfer current i₁ decreases with slope -m₂. Again, the slope depends on the components and particular voltages used for the operation of the DC/DC converter 2 and is purely exemplary. After the duration of the switching period T_{S}, this operation starts over. The portion of the switching period where the first switch 130 is closed may also be referred to as the duty cycle, hence the usage of the letter D for denoting the duty cycle of the turned-on state of the first switch 130 in Fig. 3. The duty cycle D is also a measure for the ratio between the output voltage and the input voltage of the DC/DC converter, if the DC/DC converter is operated in a continuous current mode.

**Fig. 4** shows the peak current mode control circuitry, as shown for the first current path in Fig. 2, for all four current paths of the DC/DC converter 2 of Fig. 1. Further, Fig. 4 shows a reference current generation module 400, employed for generating the first reference current i_{ref,1}, as described above with respect to Figs. 2 and 3, and a second reference current i_{ref,2}, as will be explained below.

In Fig. 4, the control circuitry for the first switch 130 is the same as the control circuitry depicted in Fig. 2. The first timing pulse generator 174, the first ramp generator 176, the first summing element 178, the first comparator 170, and the first RS flip flop 172 are depicted again in Fig. 4. It is pointed out that the first comparator 170 is implemented by a summing element, having a positive and a negative input, and a comparator with respect to the value 0 in Fig. 4. Accordingly, two separate circuit elements are shown in Fig. 4 for the first comparator 170.

The control circuitry for the second switch 230, the third switch 140, and the fourth switch 240 has an analogous layout, as compared to the control circuitry for the first switch 130. The second switch 230 is controlled by a second RS flip flop 272. The second RS flip flop 272 is associated with a second timing pulse generator 274, a second ramp generator 276, a second summing element 278, and a second comparator 270. These circuit elements are coupled in a manner analogous to the corresponding circuit elements for the control of the first switch 130. The only differences, as compared to the control circuitry for the first switch 130, are the control inputs and the phase shift of the second timing pulse generator 274, as compared to the first timing pulse generator 174. In particular, the inputs to the control circuitry for the second switch 230 are the second power transfer current i₂ and the second reference current i_{ref,2}. Further, the second timing pulse generator 274 has a phase shift of 90° with respect to the first timing pulse generator 174.

The third switch 140 is controlled by a third RS flip flop 182. The third RS flip flop 182 is associated with a third timing pulse generator 184, the first ramp generator 176, a third summing element 188, and a third comparator 180. The coupling of these circuit elements is analogous to the coupling of the circuit elements of the control circuitry for the first switch 130. The inputs to the control for the third switch 140 are the third power transfer current i₃ and the first reference current i_{ref,1}. The third timing pulse generator 184 has a phase shift of 180° with respect to the first timing pulse generator 174. It is pointed out that the control of the first switch 130 and the control of the third switch 140 both use the same first ramp generator 176. This first ramp generator 176 is capable of generating two ramp outputs, depending on the inputs of the two timing pulse generators 174 and 184. The ramps are equal in shape, but also have a phase shift. Accordingly, the closing times of the first and third switches 130, 140 also have a phase shift with respect to each other.

The fourth switch 240 is controlled by a fourth RS flip flop 282. The fourth RS flip flop 282 is associated with a fourth timing pulse generator 284, the second ramp generator 276, a fourth summing element 288, and a fourth comparator 280. The coupling of these circuit elements is analogous to the coupling of the circuit elements of the control for the first switch 130. The inputs to the control circuitry of the fourth switch 240 are the fourth power transfer current i₄ and the second reference current i_{ref,2}. The fourth timing pulse generator 284 has a phase shift of 270° with respect to the first timing pulse generator 174.

To sum up, the control circuitry, as described so far, generates four control signals for the first to fourth switches 130, 230, 140 and 240, on the basis of the first to fourth power transfer currents i₁ to i₄, on the basis of the first and second reference currents i_{ref,1} and i_{ref,2}, and on the basis of the timing pulses of the first to fourth timing pulse generators 174, 274, 184 and 284.

The generation of the first and second reference currents i_{ref,1} and I_{ref,2} will now be described. The reference current generation module is generally referred to with reference numeral 400 in Fig. 4. The inputs to the reference current generation module 400 are the first input voltage u_{i,1}, the second input voltage U_{i,2}, the total output voltage uₒ, and a desired output voltage u_{o,ref}. The first input voltage u_{i,1}, the second input voltage u_{i,2} and the output voltage uₒ are momentary values, as measured during the operation of the DC/DC converter 2, shown in Fig. 1. The output voltage uₒ is the sum of the first output voltage u_{o,1} and the second output voltage u_{o,2}. The desired output voltage is u_{o,ref} a preset parameter for the operation of the DC/DC converter 2.

In the exemplary embodiment of Fig. 4, the reference current generation module 400 is implemented as follows. The output voltage uₒ and the desired output voltage u_{o,ref} are inputs to a fifth summing element 402. The fifth summing element 402 forms the difference between the momentary output voltage uₒ and the desired output voltage u_{o,ref}. In this manner, the fifth summing element 402 determines a deviation of the output of the DC/DC converter 2 from its desired operating point. This output is supplied to a first control function module 404. The first control function module 404 generates a common reference current value i_{ref,com} from the difference between the output voltage uₒ and the desired output voltage u_{o,ref}. The generation of the common reference current value i_{ref,com} from the output voltage uₒ and the desired output voltage u_{o,ref} via the fifth summing element 402 and the first control function module 404 may be according to the formula i_{ref,com} = Kₚ (U_{o,ref} - uₒ) + Kᵢ (U_{o,ref} - uₒ) / s, which represents a proportional integral controller (PI controller) in the Laplace domain. Kₚ is the proportional gain tuning parameter of the PI controller, and Kᵢ is the integral gain tuning parameter of the PI controller. It is also possible to use a proportional controller (P controller), which may operate according to the formula i_{ref,com} = Kₚ (u_{o,ref} - uₒ). However, such a P controller is not able to reliably drive the control error 0. In this way, the common reference current i_{ref,com} is set the higher, the more the output voltage uₒ deviates from the desired output voltage u_{o,ref} in a negative direction. A high common reference current i_{ref,com} generally leads to a high duty cycle and thus to an increase of the current flow.

The reference current generation module 400 further comprises a second control function module 406, a sixth summing element 408, a third control function module 410, and a seventh summing element 412. The inputs to the second control function module 406 are the first input voltage u_{i,1} and the second input voltage u_{i,2}. The second control function module 406 calculates a first current adjustment value i_{adj,1} from the first input voltage u_{i,1} and a second input voltage u_{i,2}. The second control function module 406 may operate according to the formula i_{adj,1} = K*ₚ (u_{i,2} - u_{i,1}) + K*ᵢ (u_{i,2} - u_{i,1}) / s, which again represents a PI controller. Again, as described above, a P controller may also be used. The sixth summing element 408 forms a difference between the common reference current value i_{ref,com} and the first current adjustment value i_{adj,1} and outputs said difference as the first reference current i_{ref,1}. Via the first current adjustment value i_{adj,1}, it is achieved that the first reference current i_{ref,1} is the higher, the larger the first input voltage u_{i,1} is compared to the second input voltage u_{i,2}. In this way, the duty cycle for the first and third switches 130, 140 is increased, effecting an increased discharge of the first buffer capacitor 110 towards the first output capacitor 120. This in turn leads to a decrease of the first input voltage u_{i,1} and eventually to an evening out between the first and second input voltages u_{i,1} and u_{i,2}.

The third control function module 410 generates a second current adjustment value i_{adj,2} from the first and second input voltages u_{i,1} and u_{i,2}. In particular, the third control function module 410 operates according to the formula i_{adj,2} = K*ₚ (u_{i,1} - u_{i,2}) + K*ᵢ (u_{i,1} - u_{i,2}) / s, with K*ₚ and K*ᵢ being the same positive factors as above. The seventh summing element 412 forms a difference between the common reference current value i_{ref,com} and the second current adjustment value i_{adj,2} and outputs said difference as the second reference current i_{ref,2} for controlling the second and fourth switches 230, 240, as described above. In this way, the second reference current i_{ref,2} has a converse dependency on the first and second input voltages u_{i,1} and u_{i,2}, as compared to the first reference current i_{ref,1}. For above discussed case of the first input voltage u_{i,1} being larger than the second input voltage u_{i,2}, the second reference current i_{ref,2} is lower than the common reference current value i_{ref,com}, such that the duty cycle for the second and fourth switches 230, 240 is decreased and the second input voltage u_{i,2} increases as a consequence thereof. With a lower duty cycle, less charge is transferred away from the second buffer capacitor 210.

In this manner, the reference current generation module 400 and the ensuing peak current mode controls of the first to fourth switches allow for a stable and reliable power transfer in the DC/DC converter 2, while evening out the first and second input voltages u_{i,1} and u_{i,2} in the process. The described peak current mode controls combine an inner current control loop and an outer voltage control loop, with the outer voltage control loop not only being dependent on the desired output voltage, but also on a relation between the power transfer states of the first and second power transfer modules.

**Fig. 5** shows a second exemplary embodiment of the control circuitry for the first to fourth switches of the DC/DC converter 2. This second exemplary embodiment is very similar to the first exemplary embodiment, as depicted in Fig. 4, and only the differences between these two embodiments are described herein below. In particular, the differences only relate to the reference current generation module 400.

The reference current generation module 400 of Fig. 5 generates the same first and second reference currents i_{ref,1} and i_{ref,2}, as the reference current generation module 400 of Fig. 4. The reference current generation module 400 of Fig. 5 uses the fact that the second and third control function modules 406, 410 of Fig. 4 output two current adjustment values that only differ in sign. As compared to Fig. 4, these two current function modules are replaced by a single control function module, which corresponds to the third control function module 410 of Fig. 4. The output thereof is supplied to the sixth summing element 408 and to the seventh summing element 412. However, as compared to the Fig. 4 embodiment, this output is supplied to a positive input of the sixth summing element 408. In other words, only one current adjustment value i_{adj} is provided in the Fig. 5 embodiment, with the adding/subtracting thereof to/from the common reference current value i_{ref,com} being effected by the sixth and seventh summing elements 408, 412. All other circuit elements operate in the same manner as described above with respect to Fig. 4.

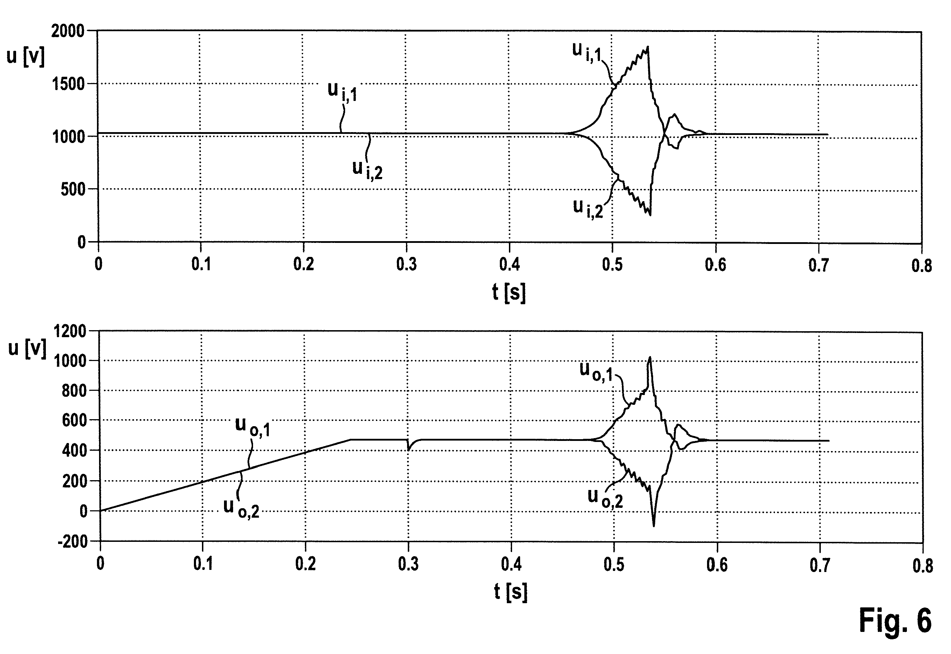

**Fig. 6** depicts the first and second input voltages u_{i,1} and u_{i,2} as well as the first and second output voltages u_{o,1} and u_{o,2} during an exemplary operation of the DC/DC converter 2 of Fig. 1, equipped with the control circuitry of Fig. 4 or Fig. 5, during various operational phases. In particular, Fig. 6 shows the operation of a voltage downconversion from 2100 V to 900 V via the DC/DC converter 2.

The first phase from 0 s to 0.3 s is a start phase, where no load is coupled to the output of the DC/DC converter 2. As an external power supply of 2100 V is coupled to the input terminals of the DC/DC converter 2, this voltage is split evenly between the first buffer capacitor 110 and the second buffer capacitor 210, such that both the first input voltage u_{i,1} and the second input voltage u_{i,2} are 1050 V, respectively. At t = 0 s, all four switches are open and a voltage of 0 V is present at the output terminals 12 of the DC/DC converter 2. At t = 0 s, the control of the DC/DC converter 2, as described above, is started. As the output voltage is 0 volt and thus is below the desired output voltage of 900 V, the control operates the first to fourth switches in a manner to increase the output voltage across the pair of output terminals 12. After about 0.25 s, the output voltage has reached the desired output voltage of 900 V across the pair of output terminals 12, with both of the first output voltage u_{o,1} and the second output voltage u_{o,2} being 450 V. The control then maintains this output voltage. At t = 0.3 s, a load is connected to the output of the DC/DC converter 2. In particular, the DC/AC converters 6, 8 of Fig. 1 and downstream loads are connected to the DC/DC converter 2. After a short dip in the output voltage due to the sudden connection of the load, the control manages to maintain both the desired output voltage as well as an even split of the total input voltage between the first input voltage u_{i,1} and the second input voltage u_{i,2}.

For the time period between t = 0.46 s and t = 0.54 s, the dependency of the control on the first and second input voltages u_{i,1} and u_{i,2} is disabled for illustrative purposes. In the framework of the control of Fig. 4, such a disabling would mean that the first current adjustment value i_{adj,1} and the second current adjustment value i_{adj,2} are set to zero for this time period. In the absence of this dependency, circuit imperfections can lead to instabilities in the behaviour of the DC/DC converter 2, as illustrated in Fig. 6. Exemplary circuit imperfections are different turn-on or turn-off delays of the switches, different impedances of the inductors, or different switching resistances of the switches. In the present example, circuit imperfections in the first and second power transfer modules 100, 200, which may arise due to manufacturing tolerances and/or component drift during operation, lead to more current being transferred via the second power transfer module 200 than via the first power transfer module. As a consequence thereof, the second output voltage u_{o,2} decreases and the first input voltage u_{i,1} increases. As the peak current mode controls and the output voltage control keep the total output voltage constant via the common current reference value i_{ref,com}, the first output voltage u_{o,1} increases. The second input voltage u_{i,2} also decreases due to the total input voltage being fixedly set via the external DC power supply. The first and second power transfer modules are loaded in totally different manners, having different voltage conditions and carrying different amounts of power transfer current. Accordingly, the strains on the two power transfer modules are completely different, potentially leading to large deviations in the operating time to failure for both of the power transfer modules. Further, it is possible that the input or output voltages deviate so much from each other that no stable operation of the DC/DC converter 2 is possible. A failure of the DC/DC converter 2 may happen.

At t = 0.54 s, the setting of the first current adjustment value i_{adj,1} and of the second current adjustment value i_{adj,2} according to the control, as described above, is started again. The resulting adjustment of the control leads to a decrease in the deviations of the input voltages and of the output voltages, with the DC/DC converter 2 reaching the desired operation with an even split of the total input voltage between the first and second buffer capacitors 110, 210 and an even split of the total output voltage between the two output capacitors 120, 220 at t = 0.6 s. This again shows that the control, as described above, is able to mitigate undesired voltage differences between the buffer capacitors on the input side and the output capacitors on the output side.

The DC/DC converter 2, as described above with respect to the figures may be provided in a train environment. In particular, the DC/DC converter 2 may be part of an auxiliary power supply system, present in a locomotive railway power system. The DC/DC converter 2 may receive high voltage power and may function as an intermediate power supply to the downstream elements. In particular, the DC/DC converter 2 may provide an intermediate level DC voltage, which is converted into AC power by one or more ensuing DC/AC converters. This AC power may then be supplied to auxiliary components of the locomotive, such as a compressor or a battery. The external power source may be 1500 V or 3000 V high voltage power line. The output power may be in the range of between 100 kW and 300 kW.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teaching of the invention without departing from the essential scope thereof. Therefore, it is intended that the invention not be limited to the particular embodiments disclosed, but that the invention will include all embodiments falling within the scope of the appended claims.

### LIST OF REFERENCE NUMERALS

- 2: multi current path DC/DC converter
- 4: external DC power source
- 6, 8: DC/AC converters
- 10: pair of input terminals
- 12: pair of output terminals
- 100: first power transfer module
- 110: first buffer capacitor
- 120: first output capacitor
- 130: first switch
- 132: first inductor
- 134: diode
- 136: current sensor
- 140: third switch
- 142: third inductor
- 150: fifth switch
- 160: seventh switch
- 170: first comparator
- 172: first RS flip flop
- 174: first timing pulse generator
- 176: first ramp generator
- 178: first summing element
- 180: third comparator
- 182: third RS flip flop
- 184: third ramp generator
- 188: third summing element
- 200: second power transfer module
- 210: second buffer capacitor
- 220: second output capacitor
- 230: second switch
- 232: second inductor
- 240: fourth switch
- 242: fourth inductor
- 250: sixth switch
- 260: eight switch
- 270: second comparator
- 272: second RS flip flop
- 274: second timing pulse generator
- 276: second ramp generator
- 278: second summing element
- 280: fourth comparator
- 282: fourth RS flip flop
- 284: fourth ramp generator
- 288: fourth summing element
- 300: node of medium potential
- 400: reference current generation module
- 402: fifth summing element
- 404: first control function module
- 406: second control function module
- 408: sixth summing element
- 410: third control function module
- 412: seventh summing element

## Claims

1. Method of controlling a multi current path DC/DC converter (2), having a pair of input terminals (10), a first power transfer module (100) with a first buffer capacitor (110), a first switch (130), a first inductor (132) and a first output capacitor (120), and a second power transfer module (200) with a second buffer capacitor (210), a second switch (230), a second inductor (232), and a second output capacitor (220), wherein the first and second buffer capacitors are connected in series between the pair of input terminals of the multi current path DC/DC converter, the method comprising the steps of:
operating the first switch in accordance with a first peak current mode control, such that power is intermittently transferred from the first buffer capacitor to the first output capacitor via a first power transfer current (i₁) through the first inductor, with the first peak current mode control of the first switch being carried out with respect to the first power transfer current, and
operating the second switch in accordance with a second peak current mode control, such that power is intermittently transferred from the second buffer capacitor to the second output capacitor via a second power transfer current (i₂) through the second inductor, with the second peak current mode control of the second switch being carried out with respect to the second power transfer current,
wherein each of the first and second peak current mode controls is dependent on a relation between a momentary power transfer state of the first power transfer module and a momentary power transfer state of the second power transfer module.

2. Method according to claim 1, wherein the multi current path DC/DC converter has a pair of output terminals (12) and wherein each of the first and second peak current mode controls is further dependent on a relation between a momentary output voltage (uₒ) across the pair of output terminals and a desired output voltage (u_{o,ref}) across the pair of output terminals.

3. Method according to claim 1 or 2, wherein the first momentary power transfer state is defined by a first input voltage (u_{i,1}) across the first buffer capacitor (110) and wherein the second momentary power transfer state is defined by a second input voltage (u_{i,2}) across the second buffer capacitor (210).

4. Method according to claim 2, wherein, when one of the first and second input voltages (u_{i,1}, u_{i,2}) is larger than the other one of the first and second input voltages, the first and second peak current mode controls close an associated one of the first and second switches (130, 230) for a longer time than the other one of the first and second switches.

5. Method according to any of claims 2 to 4,
wherein the relation between the momentary output voltage (uₒ) across the pair of output terminals (12) and the desired output voltage (u_{o,ref}) across the pair of output terminals is one of a difference relationship and a ratio between the momentary output voltage across the pair of output terminals and the desired output voltage across the pair of output terminals, and/or
wherein the relation between the momentary power transfer state of the first power transfer module and the momentary power transfer state of the second power transfer module is one of a difference relationship and a ratio between the first input voltage (u_{i,1}) and the second input voltage (u_{i,2}).

6. Method according to any of the preceding claims, wherein each of the first and second peak current mode controls is a ramp-compensated peak current mode control.

7. Method according to any of the preceding claims, wherein the first and second peak current mode controls are phase-shifted with respect to each other, in particular by a phase shift of 90°.

8. Method according to any of the preceding claims, wherein the multi current path DC/DC converter (2) is operated at a total input voltage across the pair of input terminals (10) of between 500 V and 3500 V, in particular of between 800 V and 2000 V.

9. Multi current path DC/DC converter (2), comprising:
a pair of input terminals (10) for coupling the multi current path DC/DC converter to an external DC power supply (4),
a pair of output terminals (12) for providing a converted DC power output,
a first power transfer module (100), having a first buffer capacitor (110), a first switch (130), a first inductor (132) and a first output capacitor (120), with the first switch and the first inductor forming a first power transfer path, switchably coupling the first buffer capacitor to the first output capacitor, and
a second power transfer module (200), having a second buffer capacitor (210), a second switch (230), a second inductor (232) and a second output capacitor (220), with the second switch and the second inductor forming a second power transfer path, switchably coupling the second buffer capacitor to the second output capacitor,
wherein the first and second buffer capacitors are connected in series between the pair of input terminals and wherein the first and second output capacitors are connected in series between the pair of output terminals, and
wherein the multi current path DC/DC converter is configured to control each of the first and second switches in accordance with a peak current mode control, with the peak current mode control for each of the first and second switches being dependent on a relation between a momentary power transfer state of the first power transfer module and a momentary power transfer state of the second power transfer module.

10. Multi current path DC/DC converter (2) according to claim 9, wherein the peak current mode control for each of the first and second switches is further dependent on a relation between a momentary output voltage (uₒ) across the pair of output terminals (12) and a desired output voltage (u_{o, ref}) across the pair of output terminals.

11. Multi current path DC/DC converter (2) according to claim 9 or 10, wherein the first momentary power transfer state is defined by a first input voltage (u_{i,1}) across the first buffer capacitor (110) and wherein the second momentary power transfer state is defined by a second input voltage (u_{i,2}) across the second buffer capacitor (210).

12. Multi current path DC/DC converter (2) according to any of claims 9 to 11,
wherein the first power transfer module (100) further comprises a third switch (140) and a third inductor (142), with the third switch and the third inductor forming a third power transfer path, switchably coupling the first buffer capacitor (110) to the first output capacitor (120), and with the third power transfer path being in parallel with the first power transfer path, and
wherein the second power transfer module (200) further comprises a fourth switch (240) and a fourth inductor (242), with the fourth switch and the fourth inductor forming a fourth power transfer path, switchably coupling the second buffer capacitor (210) to the second output capacitor (220), and with the fourth power transfer path being in parallel with the second power transfer path,
wherein the multi current path DC/DC converter is configured to control each of the third and fourth switches in accordance with a peak current mode control, with the peak current mode control for each of the third and fourth switches being dependent on the relation between the momentary power transfer state of the first power transfer module and the momentary power transfer state of the second power transfer module.

13. Multi current path DC/DC converter (2) according to any of claims 9 to 12, comprising at least one further power transfer module, each of the at least one further power transfer module having a further buffer capacitor, a further switch, a further inductor and a further output capacitor, with the further switch and the further inductor forming a further power transfer path, switchably coupling the further buffer capacitor to the further output capacitor,
wherein the first buffer capacitor, the second buffer capacitor and the at least one further buffer capacitor are connected in series between the pair of input terminals, and
wherein the multi current path DC/DC converter is configured to control each of the first switch, the second switch and the at least one further switch in accordance with a peak current mode control, with the peak current mode control for each of the first switch, the second switch and the at least one further switch being dependent on a relation between a momentary power transfer state of the first power transfer module, a momentary power transfer state of the second power transfer module, and a momentary power transfer state of the at least one further power transfer module.

14. Multi current path DC/DC converter (2) according to any of claims 9 to 13, configured for being operated at a total input voltage across the pair of input terminals (10) of between 500 V and 3500 V, in particular of between 800 V and 2000 V.

15. Train power conditioning module, comprising a multi current path DC/DC converter (2) according to any of claims 9 to 14, in particular comprising the multi current path DC/DC converter as an initial power conversion stage, coupled to a DC/AC conversion stage.
